# EUROPEAN PATENT APPLICATION

(11) **EP 2 270 456 A2**
(43) Date of publication of application: **05.01.2011**
(21) Application number: 10167438.0
(22) Date of filing: 28.06.2010
(51) Int. Cl.: G01L 3/10, G01L 5/22

(54) **Magnetic torque sensor**

(30) Priority: 03.07.2009 JP 2009158506
(71) Applicant: KAYABA INDUSTRY CO., LTD., Minato-ku Tokyo 105-6111 (JP)
(72) Inventor: Maehara, Hideo, Minato-ku Tokyo 105-6111 (JP)
(74) Representative: Grünecker, Kinkeldey, Stockmair & Schwanhäusser Anwaltssozietät

(57) **Abstract**

In a torque sensor (50) that detects torque acting on a torsion bar (51) in accordance with the density of magnetic flux guided to a rotating magnetic circuit portion (69) from a magnetism generating portion (60), the magnetism generating portion (60) includes a back yoke (61) that rotates together with a first shaft (10), a ring magnet (63) joined to the back yoke (61), and an adhesive (64) that is interposed between the back yoke (61) and the ring magnet (63) to join the two, and the adhesive (64) includes a rotation-stopping projecting portion (64c) that engages with a rotation-stopping recess portion (61c) formed in the back yoke (61) to function as a latch for stopping relative rotation between the back yoke (61) and the ring magnet (63) when an adhesion portion thereof adhered to the back yoke (61) peels away.

## Description

### FIELD OF THE INVENTION

This invention relates to a torque sensor that detects torque acting on a torsion bar in accordance with a density of magnetic flux derived from a magnet.

### BACKGROUND OF THE INVENTION

Conventionally, a non-contact type sensor that detects steering torque acting on a rotating shaft via magnetic force is used as a torque sensor provided in a steering device of a vehicle.

Torque sensors disclosed in JP2007-240496A and JP2007-292550A, published by the Japan Patent Office in 2007, respectively include a torsion bar housed rotatably in a housing, first and second shafts coupled to respective ends of the torsion bar, a multipolar magnet fixed to the first shaft as a magnetism generating portion, a multipolar yoke fixed to the second shaft as a rotating magnetic circuit portion, a fixed magnetic circuit portion fixed to the housing, and a magnetic sensor that detects the density of magnetic flux guided to the fixed magnetic circuit portion.

When the torsion bar is twisted by torque acting thereon, relative rotary direction positions of the magnetism generating portion and the rotating magnetic circuit portion vary, and as a result, the density of the magnetic flux guided to the fixed magnetic circuit portion from the magnetism generating portion via the rotating magnetic circuit portion varies. The magnetic sensor outputs a signal corresponding to the magnetic flux density, and the torque acting on the torsion bar is detected on the basis of this signal.

The magnetism generating portion is constituted by a back yoke formed from a yoke fixed to the first shaft, and a ring magnet serving as a multipolar magnet fixed to the back yoke via an adhesive.

### SUMMARY OF THE INVENTION

However, in the conventional torque sensor, when the adhesive between the ring magnet and the back yoke constituting the magnetism generating portion peels away, a fixing position of the ring magnet shifts relative to the first shaft to which the back yoke is fixed, causing an error in the output of the torque sensor.

This invention has been designed in consideration of this problem, and an object thereof is to provide a torque sensor in which a fixing position of a ring magnet does not shift relative to a back yoke even when an adhesive peels away.

To achieve the above object, this invention provides a torque sensor that detects a torque transmitted between a first shaft and a second shaft. The torque sensor comprises: a torsion bar that connects the first shaft and the second shaft; a magnetism generating portion fixed to the first shaft; and a rotating magnetic circuit portion fixed to the second shaft, wherein the torque acting on the torsion bar is detected in accordance with a density of a magnetic flux guided to the rotating magnetic circuit portion from the magnetism generating portion, the magnetism generating portion comprises: a back yoke that rotates together with the first shaft; a ring magnet joined to the back yoke; and
an adhesive that is interposed between the back yoke and the ring magnet to join the two, and the adhesive comprises a rotation-stopping projecting portion64c that engages one of the back yoke and the ring magnet.

The details as well as other features and advantages of this invention are set forth in the remainder of the specification and are shown in the accompanying drawings.

### BRIEF DESCRIPTION OF THE DRAWINGS

FIG. 1 is a sectional view of a power steering device according to an embodiment of this invention.

FIG. 2 is an exploded perspective view of the power steering device according to the embodiment of this invention.

FIGs. 3A and 3B are exploded perspective views of a rotating magnetic circuit portion according to the embodiment of this invention.

FIG. 4 is a sectional view of a torque sensor according to the embodiment of this invention.

FIGs. 5A and 5B are sectional views of a magnetism generating portion according to the embodiment of this invention.

FIG. 6 is an exploded sectional view of the magnetism generating portion according to the embodiment of this invention.

FIG. 7 is a plan view of the magnetism generating portion according to the embodiment of this invention.

FIG. 8 is a sectional view of the torque sensor according to the embodiment of this invention.

FIG. 9 is an output characteristic diagram relating to the torque sensor according to the embodiment of this invention.

FIG. 10 is an exploded sectional view of a magnetism generating portion according to another embodiment of this invention.

FIG. 11 is an exploded sectional view of a magnetism generating portion according to a yet another embodiment of this invention.

### DESCRIPTION OF THE PREFERRED EMBODIMENTS

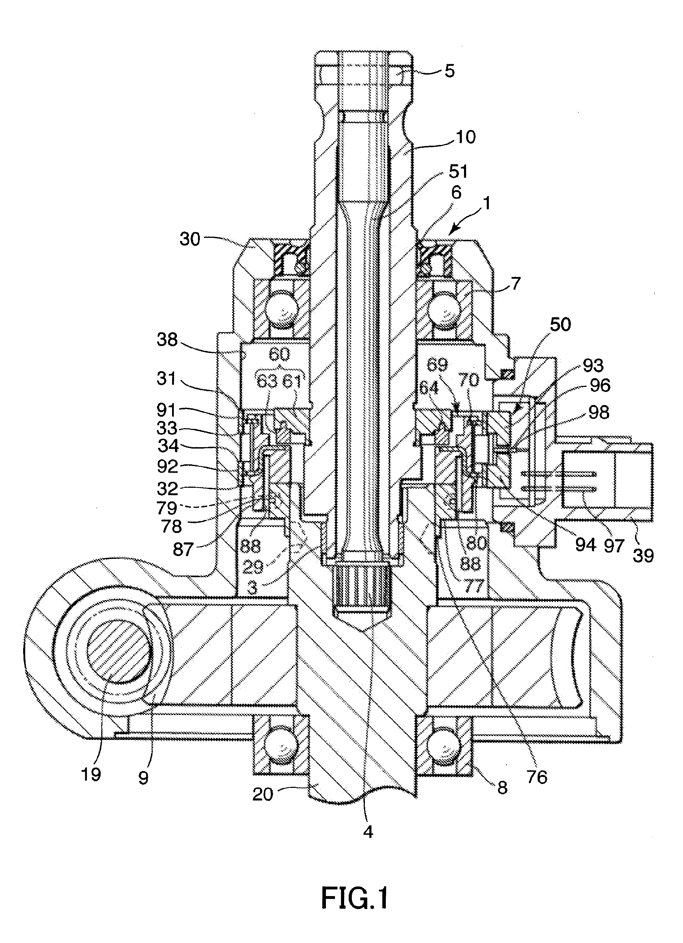

Referring to FIG. 1, a power steering device for a vehicle to which this invention is applied will be described.

In a power steering device 1, a first shaft 10 serving as an input shaft and a second shaft 20 serving as an output shaft are linked rotationally to a steering wheel such that when a rack shaft meshed to a pinion formed on a lower end of the second shaft 20 moves in an axial direction, a vehicle wheel is steered.

The power steering device 1 includes, as an assist mechanism for applying auxiliary steering torque, a worm wheel 9 coupled to the second shaft 20, a worm 19 meshed to the worm wheel 9, and an electric motor that drives the worm 19 to rotate. The power steering device 1 is formed such that the electric motor applies auxiliary steering torque to the second shaft 20.

The power steering device 1 includes a torque sensor 50 that detects the steering torque. The power steering device 1 is formed such that a controller controls an output of the electric motor in accordance with the steering torque detected by the torque sensor 50.

The structure of the torque sensor 50 will be described below.

The first shaft 10 is supported rotatably in a housing 30 via a roller bearing 7. The second shaft 20 is supported rotatably in a housing, not shown in the figures, via a roller bearing 8. A slide bearing 3 is interposed between a lower end portion of the first shaft 10 and the second shaft 20. The first shaft 10 and second shaft 20 are thus supported to be capable of coaxial relative rotation.

A gap between the housing 30 and the first shaft 10 is tightly sealed by a dust seal 6 interposed therebetween. The first shaft 10 is formed in a cylindrical shape. A torsion bar 51 is housed in an inner periphery of the first shaft 10.

An upper end portion of the torsion bar 51 is coupled to the first shaft 10 via a pin 5. A lower end portion of the torsion bar 51 is coupled to the second shaft 20 via a serration 4. The torsion bar 51 transmits steering torque input into the first shaft 10 to the second shaft 20 and twists in accordance with the steering torque.

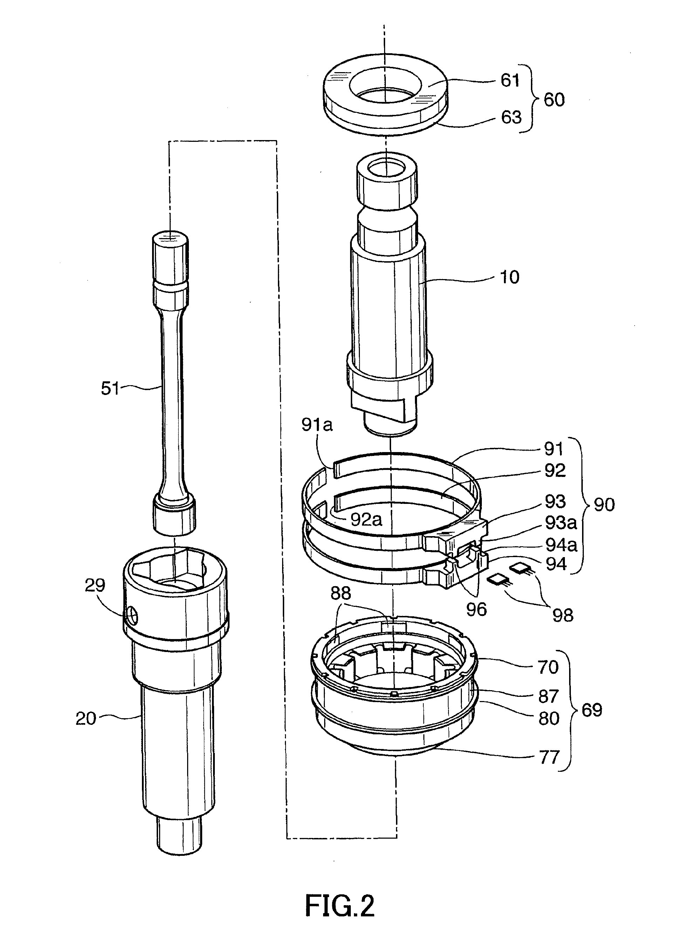

Referring to FIG. 2, the torque sensor 50 comprises the torsion bar 51, a magnetism generating portion 60 that rotates together with the first shaft 10, a rotating magnetic circuit portion 69 that rotates together with the second shaft 20, a fixed magnetic circuit portion 90 provided fixedly in the housing 30, and a magnetic sensor 98 that detects a density of magnetic flux guided to the fixed magnetic circuit portion 90. The torque sensor 50 detects the steering torque acting on the torsion bar 51 on the basis of an output of the magnetic sensor 98.

The magnetism generating portion 60 comprises a back yoke 61 fixed to the first shaft 10, and an annular ring magnet 63 fixed to the back yoke 61.

The back yoke 61 is fixed to the first shaft 10 by press-fitting. When attaching the magnetism generating portion 60 to the first shaft 10, first, an axial direction positioning process is performed to press-fit the back yoke 61 rotationally onto an axial direction attachment proximity site set in the axial direction of the first shaft 10 such that the back yoke 61 is capable of sliding. Next, a rotary direction positioning process is performed to derive a rotary direction neutral position of the magnetism generating portion 60 by measuring the magnetic flux density of magnetism led to the rotating magnetic circuit portion 69 while the back yoke 61 is in the rotationally press-fitted state. Next, a fixing process is performed to fix the back yoke 61 disposed in the rotary direction neutral position by press-fitting the back yoke 61 onto the first shaft 10 more firmly. In so doing, the rotary direction neutral position of the magnetism generating portion 60 can be derived accurately, and the back yoke 61 can be fixed to the first shaft 10.

This invention is not limited to the above constitution, and the back yoke 61 may be formed integrally with the first shaft 10.

The ring magnet 63 is an annular permanent magnet that generates magnetism in a rotary axis O direction of the first shaft 10 and the torsion bar 51. The ring magnet 63 is a multipolar magnet formed by magnetizing a hard magnetic material toward the rotary axis O direction of the first shaft 10.

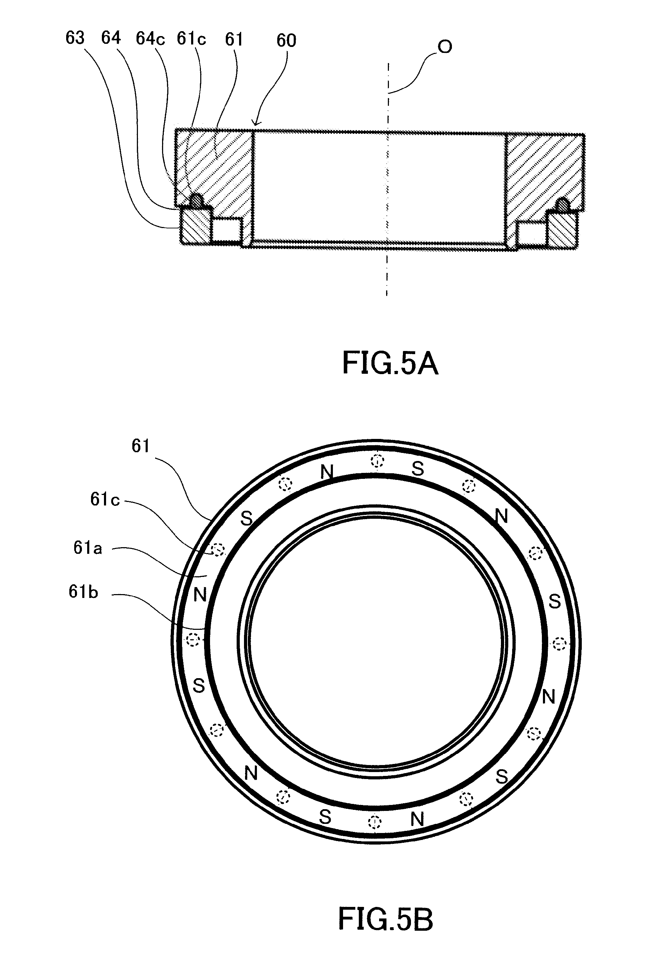

Referring to FIG. 5B, twelve magnetic poles are formed on each of an upper end surface and a lower end surface of the ring magnet 63 at equal intervals in a circumferential direction. Six N poles and six S poles are arranged alternately on the upper end surface and lower end surface of the ring magnet 63.

The back yoke 61 is formed in a cylindrical shape from a soft magnetic material, and contacts a pole face forming the upper end surface of the ring magnet 63. The back yoke 61 acts as a support member that couples the ring magnet 63 to the first shaft 10 and a yoke that joins adjacent magnetic poles of the ring magnet 63 in order to guide magnetic flux. Thus, the back yoke 61 causes magnetic force to gather on a pole face forming the lower end surface of the ring magnet 63.

A support member for coupling the ring magnet 63 to the first shaft 10 may be provided separately to the back yoke such that the back yoke is interposed between the support member and the ring magnet 63.

Referring again the FIG. 2, the rotating magnetic circuit portion 69 comprises a first soft magnetic ring 70 and a second soft magnetic ring 80 that guide the magnetic flux output by the ring magnet 63, an assembly member 77 fixed to the second shaft 20, and a resin mold 87 that fixes the first soft magnetic ring 70 and second soft magnetic ring 80 to the assembly member 77.

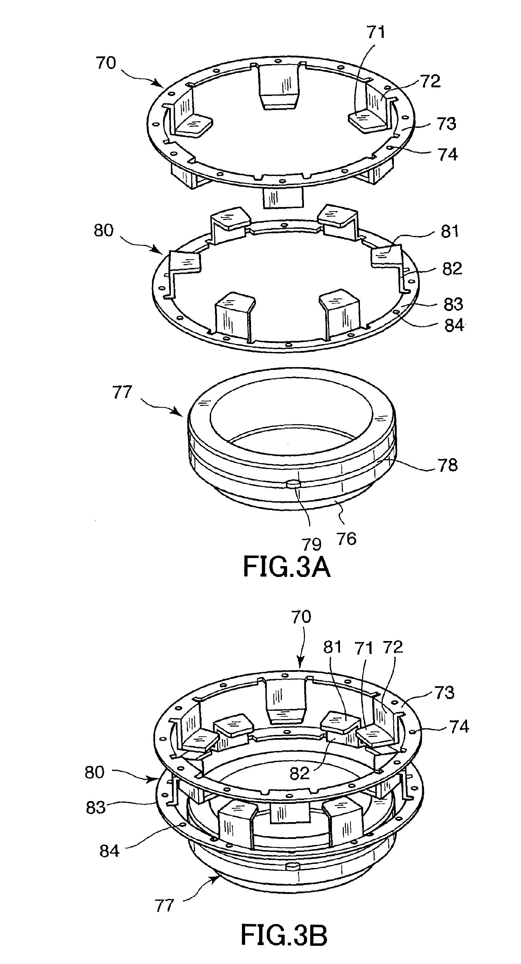

FIG. 3A is a perspective view of the rotating magnetic circuit portion 69, showing the first soft magnetic ring 70, second soft magnetic ring 80, and assembly member 77 in an exploded state. FIG. 3B is a perspective view of the rotating magnetic circuit portion 69, showing the first soft magnetic ring 70, second soft magnetic ring 80, and assembly member 77 in an assembled state.

The first soft magnetic ring 70 and second soft magnetic ring 80 respectively comprise six first magnetic path tip end portions 71 and six second magnetic path tip end portions 81 facing the pole face that forms the lower end surface of the ring magnet 63, six first magnetic path column portions 72 and six second magnetic path column portions 82 that are bent from the first magnetic path tip end portions 71 and the second magnetic path tip end portions 81 so as to extend in directions heading away from each other, and a first magnetic path ring portion 73 and a second magnetic path ring portion 83 that extend in a ring shape to join the first magnetic path column portions 72 and the second magnetic path column portions 82. The first soft magnetic ring 70 and second soft magnetic ring 80 are formed by pressing processing. However, the first soft magnetic ring 70 and second soft magnetic ring 80 are not limited to pressing and may be formed by casting, sintering, and so on.

The first soft magnetic ring 70 and the second soft magnetic ring 80 are identically shaped common components. The first soft magnetic ring 70 and second soft magnetic ring 80 are provided such that assembly directions of the common components are reversed. However, the first soft magnetic ring 70 and second soft magnetic ring 80 are not limited to this constitution and may have different shapes.

The first magnetic path tip end portions 71 and second magnetic path tip end portions 81 are respectively arranged at equal intervals in a circumferential direction on an identical orthogonal plane to the rotary axis O of the torsion bar 51. The first magnetic path tip end portions 71 and second magnetic path tip end portions 81 are disposed such that in a neutral state where no torque is applied to the torsion bar 51, respective center lines thereof extending in a diametrical direction of the torsion bar 51 indicate boundaries between the N poles and S poles of the ring magnet 63.

The first magnetic path column portions 72 and second magnetic path column portions 82 are formed in a flat plate shape and provided to extend in the rotary axis O direction of the torsion bar 51.

When the first soft magnetic ring 70 and second soft magnetic ring 80 are formed by casting, sintering, or the like, the first magnetic path column portions 72 and second magnetic path column portions 82 may take a block shape possessing thickness in the diametrical direction of the torsion bar 51.

The first magnetic path column portions 72 are disposed at predetermined intervals to surround an outer peripheral surface of the ring magnet 63. The first magnetic path column portions 72 are provided to prevent short-circuits in the magnetic flux of the ring magnet 63.

The second magnetic path column portions 82 are disposed to extend in an opposite direction to the first magnetic path column portions 72 along the rotary axis O.

By having the first magnetic path column portions 72 and the second magnetic path column portions 82 extend in directions heading away from each other in this manner, the first magnetic path ring portion 73 and the second magnetic path ring portion 83 are sufficiently removed from each other in the rotary axis O direction of the torsion bar 51, and therefore magnetic short-circuits between the two can be prevented.

The first magnetic path ring portion 73 and the second magnetic path ring portion 83 are disposed on an orthogonal plane to the rotary axis O of the torsion bar 51. The first magnetic path ring portion 73 and second magnetic path ring portion 83 are formed in a flat ring shape coaxial with the rotary axis O of the torsion bar 51. The first magnetic path ring portion 73 and the second magnetic path ring portion 83 have a constant width in a radial direction of the torsion bar 51.

Each of the first magnetic path ring portion 73 and the second magnetic path ring portion 83 are formed in a ring shape that is connected over its entire periphery, but the first magnetic path ring portion 73 and second magnetic path ring portion 83 are not limited thereto, and may be formed as C-shaped rings by forming a slit in a single location of a ring.

The first magnetic path ring portion 73 is disposed above the pole face on the lower surface of the ring magnet 63. The second magnetic path ring portion 83 is disposed below the ring magnet 63. In other words, the ring magnet 63 is disposed between the first magnetic path ring portion 73 and the second magnetic path ring portion 83 in the rotary axis O direction of the torsion bar 51.

Hence, a rotary axis direction length of the first magnetic path column portions 72 and second magnetic path column portions 82 can be reduced, and at the same time, the first magnetic path ring portion 73 and the second magnetic path ring portion 83 can be removed from each other so that magnetic short-circuits do not occur there between. By reducing the rotary axis direction length of the first magnetic path column portions 72 and second magnetic path column portions 82, the first soft magnetic ring 70 and the second soft magnetic ring 80 can be formed by pressing processing, leading to a reduction in product cost.

By forming the first soft magnetic ring 70 and the second soft magnetic ring 80 through pressing processing, an amount of used materials can be reduced in comparison with a case where the first soft magnetic ring 70 and second soft magnetic ring 80 are formed by casting or sintering.

By forming the first soft magnetic ring 70 and the second soft magnetic ring 80 through pressing processing, a plate thickness of each portion thereof can be reduced in comparison with a case where the first soft magnetic ring 70 and second soft magnetic ring 80 are formed by casting or sintering. Hence, although a magnetic path sectional area of the first soft magnetic ring 70 and second soft magnetic ring 80 decreases, an improvement in a magnetic hysteresis characteristic can be achieved by employing a high-density material.

In this torque sensor 50, the first magnetic path column portions 72 of the first soft magnetic ring 70 surround the ring magnet 63. Thus, an increase in rotary axis direction length of the torque sensor 50 due to the need to provide space to interpose the first soft magnetic ring 70 is suppressed. As a result, the power steering device 1 can be reduced in size and weight.

Although the shape of the first soft magnetic ring 70 and second soft magnetic ring 80 are as described above, the first soft magnetic ring 70 is not limited to a shape that surrounds the ring magnet 63. For example, the first soft magnetic ring 70 may be formed in a flat shape in which the first magnetic columns 72 are omitted and the first magnetic tips 71 project inward directly from the first magnetic ring 73. In this case, only the second magnetic columns 82 of the second soft magnetic member 80 function to provide a space between the first magnetic ring 73 and the second magnetic ring 83 in the direction of the rotation axis of the torsion bar 51 so as to prevent a magnetic short-circuit between the first magnetic ring 73 and the second magnetic ring 83.

Similarly, the second soft magnetic member 80 may be formed in a flat shape in which the second magnetic columns 82 are omitted and the second magnetic tips 81 project inward directly from the second magnetic ring 83. In this case, only the first magnetic columns 72 provided in the first soft magnetic member 70 function to provide a space between the first magnetic ring 73 and the second magnetic ring 83 in the direction of the rotation axis of the torsion bar 61 so as to prevent a magnetic short-circuit between the first magnetic ring 73 and the second magnetic ring 83.

The resin mold 87 is formed by disposing the assembly member 77, the first soft magnetic ring 70, and the second soft magnetic ring 80 in a die, pouring molten thermoplastic resin into the die, and then cooling and hardening the thermoplastic resin. The resin used to form the resin mold 87 is not limited to thermoplastic resin, and thermosetting resin or reaction-curable resin may be used instead.

The fixed magnetic circuit 90 comprises a first magnetic collecting ring 91 facing the outer periphery of the first magnetic ring 73, a second magnetic collecting ring 92 facing the outer periphery of the second magnetic ring 83, a first magnetic collecting yoke 93 connected to the first magnetic collecting ring 91, and second magnetic collecting yoke 94 connected to the second magnetic collecting ring 92.

A first magnetism collecting yoke 93 and a second magnetism collecting yoke 94 are provided to contact respective outer peripheries of a first magnetism collecting ring 91 and a second magnetism collecting ring 92. Magnetic gaps 96 serving as a pair of voids are formed between the first magnetism collecting yoke 93 and the second magnetism collecting yoke 94, and the magnetic sensor 98 is interposed in the magnetic gaps 96.

The first magnetism collecting yoke 93 and the second magnetism collecting yoke 94 are formed in block shapes joined to respective outer peripheral surfaces of the first magnetism collecting ring 91 and the second magnetism collecting ring 92, and respectively include a pair of magnetism collecting projecting portions 93a and a pair of magnetism collecting projecting portions 94a defining the magnetic gaps 96. An end surface of the magnetism collecting projecting portion 93a and an end surface of the magnetism collecting projecting portion 94a are formed in a planar shape to oppose each other in parallel.

A Hall element is used as the magnetic sensor 98 for detecting magnetism. The Hall element outputs a voltage corresponding to the magnetic flux density passing there through in the form of a signal.

The magnetic sensor 98 outputs a voltage corresponding to a size and a direction of a magnetic field of the magnetic gap 96 via a signal line 97. A sensor including a circuit for amplifying the signal from the Hall element, a circuit for performing temperature compensation, a noise filtering circuit, and so on may be used as the magnetic sensor 98.

The magnetic sensor 98 is attached to the housing 30 via a sensor holder 39 shown in FIG. 1. The signal line 97 of the magnetic sensor 98 is connected to the controller via a wire connected to the sensor holder 39.

Next, an operation performed by the torque sensor 50 to detect the steering torque acting on the torsion bar 51 will be described.

In a neutral state where no torque acts on the torsion bar 51, the first magnetic path tip end portions 71 of the first soft magnetic ring 70 and the second magnetic path tip end portions 81 of the second soft magnetic ring 80 oppose the respective N poles and S poles of the ring magnet 63 by an identical surface area. At this time, the N poles and S poles are magnetically short-circuited, and therefore magnetic flux is not guided to the rotating magnetic circuit portion 69 and the fixed magnetic circuit portion 90.

When a driver operates a steering wheel of the vehicle such that torque is applied to the torsion bar 51 in a certain direction, the torsion bar 51 is twisted in accordance with the direction of the torque. When the torsion bar 51 is twisted, the first magnetic path tip end portions 71 oppose the S poles by a larger surface area than the N poles, whereas the second magnetic path tip end portions 81 oppose the N poles by a larger surface area than the S poles, and as a result, magnetic flux from the ring magnet 63 is guided to the rotating magnetic circuit portion 69 and the fixed magnetic circuit portion 90. The magnetic sensor 98 then outputs a signal corresponding to the intensity and direction of the magnetic field. A magnetic path of the rotating magnetic circuit portion 69 and the fixed magnetic circuit portion 90 through which the magnetic flux is guided extends from the N poles to the S poles via the first magnetic path tip end portions 71, the first magnetic path column portions 72, the first magnetic path ring portion 73, the first magnetism collecting ring 91, the first magnetism collecting yoke 93, the second magnetism collecting yoke 94, the second magnetism collecting ring 92, the second magnetic path ring portion 83, the second magnetic path column portions 82, and the second magnetic path tip end portions 81.

When the driver of the vehicle operates the steering wheel such that torque is applied to the torsion bar 51 in an opposite direction, the torsion bar 51 is twisted in an opposite direction in accordance with the direction of the torque. When the torsion bar 51 is twisted, the first magnetic path tip end portions 71 oppose the N poles by a larger surface area than the S poles, whereas the second magnetic path tip end portions 81 oppose the S poles by a larger surface area than the N poles, and as a result, magnetic flux from the ring magnet 63 is guided through an opposite magnetic path to the magnetic path described above. The magnetic sensor 98 then outputs a signal corresponding to the intensity and direction of the magnetic field. The magnetic path of the rotating magnetic circuit portion 69 and the fixed magnetic circuit portion 90 through which the magnetic flux is guided extends from the N poles to the S poles via the second magnetic path tip end portions 81, the second magnetic path column portions 82, the second magnetic path ring portion 83, the second magnetism collecting ring 92, the second magnetism collecting yoke 94, the first magnetism collecting yoke 93, the first magnetism collecting ring 91, the first magnetic path ring portion 73, the first magnetic path column portions 72, and the first magnetic path tip end portions 71.

The torsion bar 51 twists in accordance with the torque acting thereon. When a surface area difference by which the first magnetic path tip end portions 71 and second magnetic path tip end portions 81 oppose the N poles and S poles of the ring magnet 63 increases, the density of the magnetic flux guided to the magnetic sensor 98 increases, and the magnetic sensor 98 outputs a signal corresponding to the torque.

The number of magnetic poles formed on one end surface of the ring magnet 63 may be set as desired within a range of two or more. When the first soft magnetic ring 70 and second soft magnetic ring 80 oppose the ring magnet 63 by an identical surface area, the density of the magnetic flux guided to the magnetic sensor 98 can be increased by increasing the number of magnetic poles.

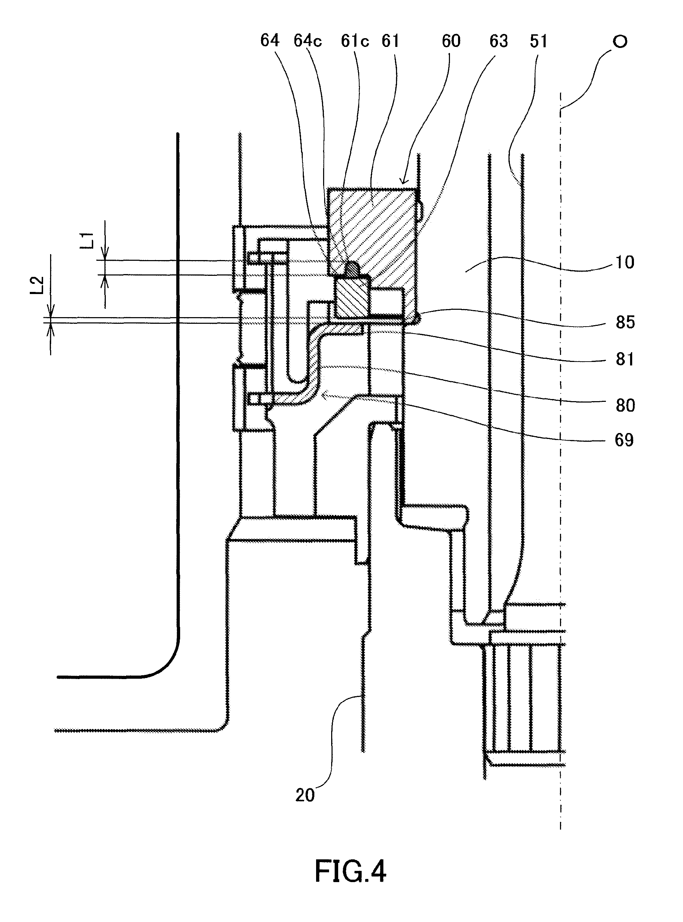

FIG. 4 is a sectional view of the torque sensor 50, in which the magnetism generating portion 60 has been enlarged. The ring magnet 63 is adsorbed to the back yoke 61 by magnetic force and joined to the back yoke 61 by an adhesive 64.

The adhesive 64 is applied between the back yoke 61 and the ring magnet 63 in a liquid state. The adhesive 64 is hardened following application to join the back yoke 61 to the ring magnet 63.

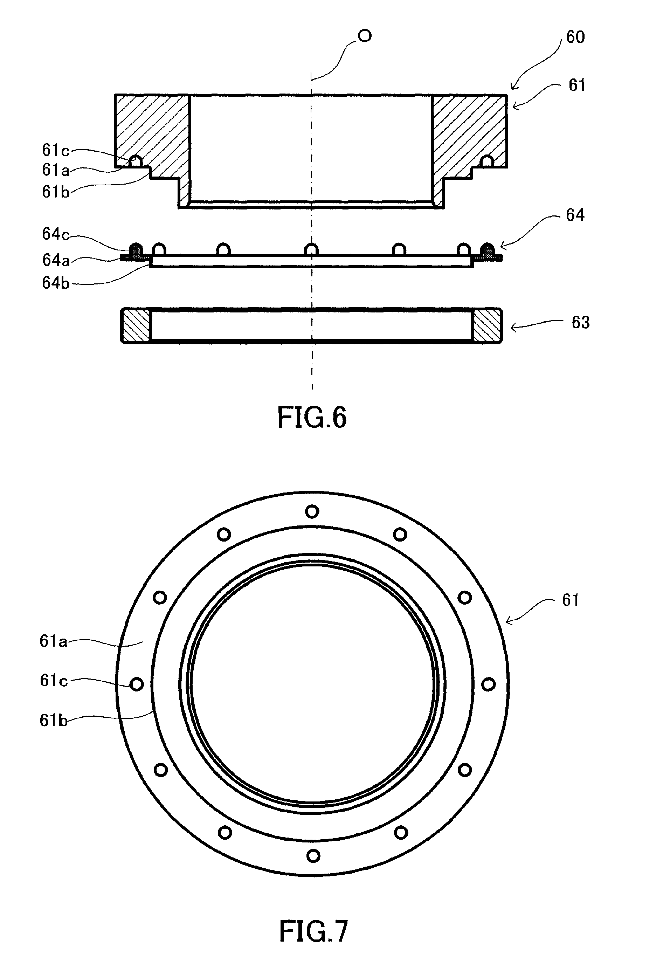

FIG. 5A is a sectional view of the magnetism generating portion 60. FIG. 5B is a plan view of the magnetism generating portion 60. FIG. 6 is an exploded sectional view of the ring magnet 63, adhesive 64, and back yoke 61 constituting the magnetism generating portion 60. FIG. 7 is a plan view of the back yoke 61.

Referring to FIG. 6, the back yoke 61 is formed in a ring shape. The back yoke 61 comprises an annular attachment end surface 61 a that is orthogonal to the rotary axis O of the torsion bar 51, and a cylindrical attachment outer peripheral surface 61 b that extends concentrically with the rotary axis O of the torsion bar 51.

The ring magnet 63 is formed from sintered metal, for example. The ring magnet 63 is formed in a ring shape. The ring magnet 63 has a square sectional shape.

The adhesive 64 is molded into a ring shape between the back yoke 61 and the ring magnet 63. The adhesive 64 comprises a disc portion 64a that is orthogonal to the rotary axis O of the torsion bar 51, and a cylindrical portion 64b that extends parallel to the rotary axis O of the torsion bar 51. The adhesive 64 is not limited to a continuous ring shape, and may be varied in thickness or partially interrupted in accordance with an interval provided between the back yoke 61 and the ring magnet 63.

Referring to FIG. 7, the back yoke 61 is formed with a rotation-stopping recess portion 61c in the form of a plurality of holes opening onto the attachment end surface 61a. In this embodiment, twelve holes are provided to form the rotation-stopping recess portion 61c.

Each of the holes has a circular cross-section and in parallel with the rotary axis O of the torsion bar 51. Each of the holes that form the rotation-stopping recess portion 61 c has a predetermined depth L1. It should be noted that the rotation-stopping recess portion 61c is not limited to the holes but may be presented in the form of radical grooves.

Referring to FIG. 5B, the respective holes of the rotation-stopping recess portion 61c are disposed in boundary portions between the N poles and S poles of the ring magnet 63 and arranged in a circumferential direction centering on the rotary axis O of the torsion bar 51. The six N poles and the six S poles are arranged alternately at equal intervals on the annular ring magnet 63. The holes of the rotation-stopping recess portion 61c are arranged at the same intervals in the yoke 61 in a circumferential direction.

Referring to FIG. 6, the adhesive 64 further comprises a rotation-stopping projecting portion 64c in the form of a plurality of projections. The rotation-stopping recess portion 61c is provided in the form of holes whereas the rotation-stopping projection portion 64c is provided in the form of projections formed by filling the holes with the adhesive. In this embodiment, twelve projections are provided as the rotation-stopping projecting portion 64c. Each of the projections is formed in a columnar shape in parallel with the rotary axis O of the torsion bar 51. Referring to FIG. 4, each of the projections forming the rotation-stopping projecting portion 64c has a predetermined projection length L1.

Referring to FIG. 4, an air gap 85 is defined between the lower surface of the ring magnet 63 and the first magnetic path tip end portions 71 of the first soft magnetic ring 70, as well as between the lower surface of the ring magnet 63 and second magnetic path tip end portions 81 of the second soft magnetic ring 80. The air gap 85 has a predetermined clearance L2 in the rotary axis O direction of the torsion bar 51.

The holes of rotation-stopping recess portion 61c are formed such that the depth L1 thereof is greater than the clearance L2 of the air gap 85. In other words, a relationship of L1 > L2 is set.

The adhesive 64 is set to have a greater adhesive force relative to the ring magnet 63 than to the back yoke 61. Thus, when the adhesive force of the adhesive 64 deteriorates over time or the like, an adhesion portion of the adhesive 64 adhered to the back yoke 61 peels away before an adhesion portion adhered to the ring magnet 63.

When the adhesive 64 peels away from the back yoke 61 before peeling away from the ring magnet 63, the rotation-stopping recess portion 61c of the back yoke 61 and the rotation-stopping projecting portion 64c of the adhesive 64, which is engaged with the rotation-stopping recess portion 61c and hardened, function as latches to stop the ring magnet 63 from rotating relative to the back yoke 61.

In a state where the rotation-stopping projecting portion 64c function as latches to stop rotation of the ring magnet 63 relative to the back yoke 61 when the ring magnet 63 becomes dislodged, a force required to shear the rotation-stopping projecting portion 64c from the rotation-stopping recess portion 61c is set to be larger than a frictional force generated between the ring magnet 63 and the first magnetic path tip end portions 71 of the first soft magnetic ring 70, as well as between the lower surface of the ring magnet 63 and second magnetic path tip end portions 81 of the second soft magnetic ring 80. To reduce this frictional force, a lubricant may be applied to the lower surface of the ring magnet 63 and the first magnetic path tip end portions 71 of the first soft magnetic ring 70 and second magnetic path tip end portions 81 of the second soft magnetic ring 80.

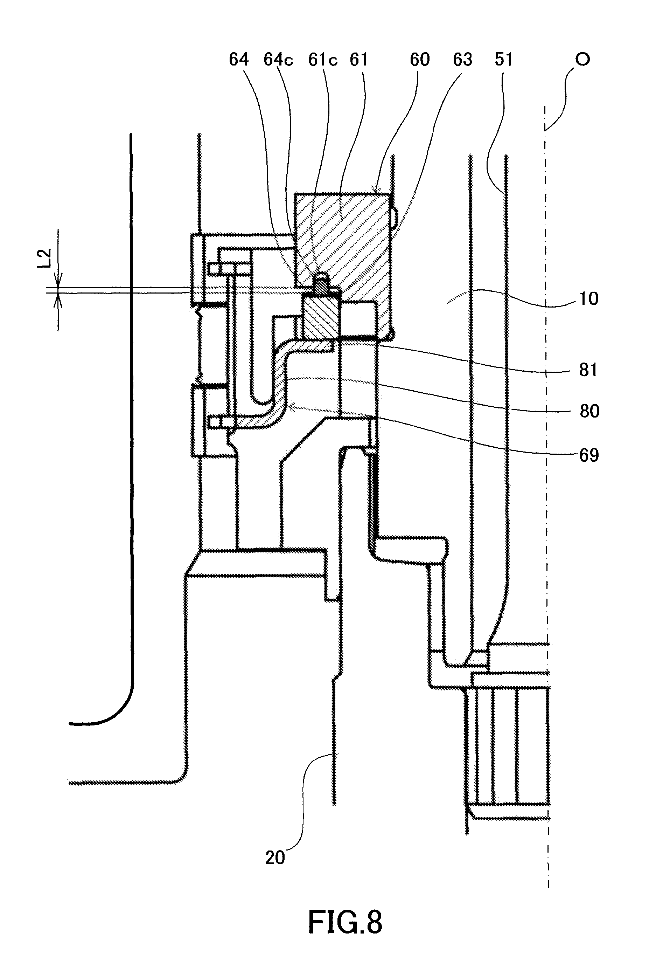

FIG. 8 is a sectional view showing a ring magnet dislodged state in which the adhesion portion between the adhesive 64 and the back yoke 61 peels away due to an impact, temporal deterioration, or the like such that the ring magnet 63 becomes dislodged from the back yoke 61. When the ring magnet 63 becomes dislodged, the ring magnet 63 comes into contact with the first magnetic path tip end portions 71 of the first soft magnetic ring 70 and the second magnetic path tip end portions 81 of the second soft magnetic ring 80 due to magnetic force and gravity. As a result, further displacement of the ring magnet 63 in the axial direction is restricted. Hence, the rotation-stopping projecting portion 64c fall out of the rotation-stopping recess portion 61c by an amount corresponding to the clearance L2 of the air gap 85. However, the rotation-stopping projecting portion 64c do not fall out of the rotation-stopping recess portion 61c completely, and tip end portions of the projections of the rotation-stopping projecting portion 64c remain engaged to the holes of the rotation-stopping recess portion 61c.

When steering torque causes the first shaft 10 to rotate relative to the second shaft 20 in a state where the ring magnet 63 is dislodged, the ring magnet 63 rotates together with the first shaft 10 via the tip end portions of the projections of the rotation-stopping projecting portion 64c of the adhesive 64, which remain engaged to the holes of the rotation-stopping recess portion 61c of the back yoke 61. At this time, the lower surface of the ring magnet 63 slides over the first magnetic path tip end portions 71 of the first soft magnetic ring 70 and the second magnetic path tip end portions 81 of the second soft magnetic ring 80.

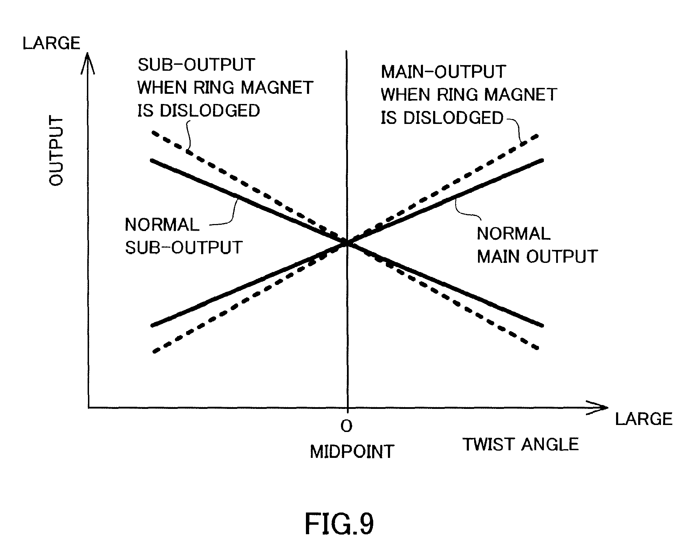

A graph in FIG. 9 shows an output characteristic of the magnetic sensor 98. In FIG. 9, the abscissa shows a twist angle of the torsion bar 51, or in other words a rotation direction position of the magnetism generating portion 60 relative to the rotating magnetic circuit portion 69, and the ordinate shows the output of the magnetic sensor 98. In FIG. 9, a solid line indicates the output characteristic when the torque sensor 50 is normal and a broken line indicates the output characteristic when the ring magnet 63 is dislodged.

When the ring magnet 63 is dislodged, the ring magnet 63 rotates together with the first shaft 10 via the rotation-stopping projecting portion 64c. At this time, the lower surface of the ring magnet 63 slides over the first magnetic path tip end portions 71 of the first soft magnetic ring 70 and the second magnetic path tip end portions 81 of the second soft magnetic ring 80. As a result, the output of the magnetic sensor 98 increases in comparison with a normal case in which the ring magnet 63 is not dislodged. However, a midpoint output, or in other words the output when the steering wheel is at a midpoint for moving the vehicle forward, exhibits substantially no deviation and therefore increases and decreases in accordance with the twist angle of the torsion bar 51.

When the ring magnet 63 becomes dislodged in the power steering device 1, although the auxiliary steering torque increases slightly in comparison with a normal case, situations in which a difference in the auxiliary steering torque occurs between left and right steering operations or auxiliary steering torque is generated automatically such that self-steering occurs are avoided. Hence, even when the ring magnet 63 becomes dislodged, substantially no error occurs in the output of the torque sensor 50, and therefore a failsafe function is realized.

At this time, the driver can realize that an abnormality has occurred in the power steering device 1 by the slight increase in the auxiliary steering torque, or in other words a reduction in a force required to operate the steering wheel.

Further, the ring magnet 63 comprises the plurality of magnetic poles that generate magnetism in the rotary axis O direction of the torsion bar 51. The magnetic poles are arranged in the magnet ring 63 in the circumferential direction about the rotary axis O of the torsion bar 51 as center, and the holes of the rotation-stopping recess portion 61c are arranged in the rotary axis O direction of the torsion bar 51 in the boundary portions between adjacent magnetic poles.

Hence, the holes of the rotation-stopping recess portion 61c reduce the magnetic path area of the ring magnet 63, but since the holes of the rotation-stopping recess portion 61c are disposed opposite to the boundary portion between the magnetic poles, in which the magnetic flux density is low, reductions in the density of the magnetic flux guided to the magnetic sensor 98 caused by the rotation-stopping recess portion 61c are suppressed. As a result, a detection precision of the torque sensor 50 is maintained.

According to the embodiment described above, the following effects are obtained.

The adhesive 64 joining the back yoke 61 and the ring magnet 63 includes the rotation-stopping projecting portion 64c that engages with the rotation-stopping recess portion 61c formed in the back yoke 61 and functions as latches to stop relative rotation between the back yoke 61 and the ring magnet 63 when the adhesion portion adhered to the back yoke 61 peels away.

Therefore, when the ring magnet 63 separates and becomes dislodged from the back yoke 61, the ring magnet 63 rotates together with the first shaft 10 via the tip end portions of the rotation-stopping projecting portion 64c of the adhesive 64, which remains engaged to the rotation-stopping recess portion 61c. Hence, deviation in the fixing position of the ring magnet 63 relative to the back yoke 61 can be prevented.

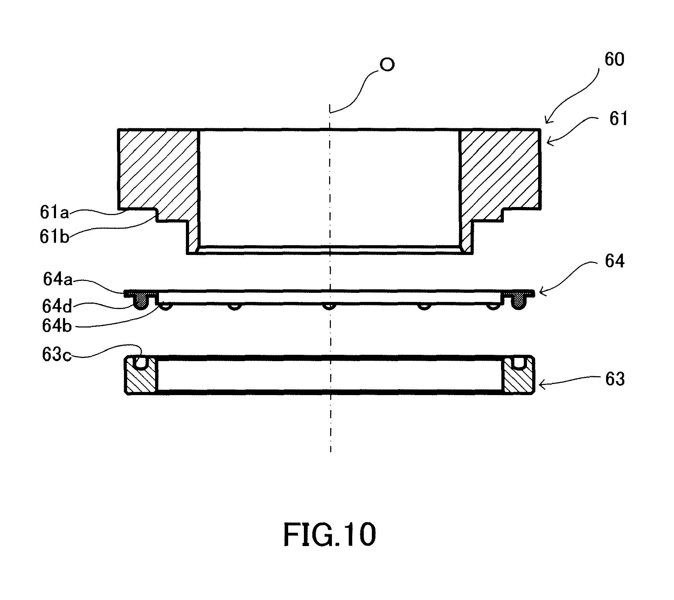

Next, another embodiment shown in FIG. 10 will be described. In this embodiment, identical reference symbols have been allocated to constitutions which are identical to those of the embodiment described above, and duplicate description thereof has been omitted where appropriate.

The ring magnet 63 according to this embodiment has a plurality of holes forming a rotation-stopping recess portion 63c opening onto its upper surface. In this embodiment, twelve holes form the rotation-stopping recess portion 63c.

The adhesive 64 includes a plurality of projections forming a rotation-stopping projecting portion 64d inserted into the holes at the rotation-stopping recess portion 63c. In this embodiment, twelve projections form the rotation-stopping projecting portion 64d.

The adhesive 64 is set to have a greater adhesive force relative to the back yoke 61 than to the ring magnet 63. Thus, when the adhesive force of the adhesive 64 deteriorates over time or the like, the adhesion portion of the adhesive 64 adhered to the ring magnet 63 peels away before the adhesion portion adhered to the back yoke 61.

When the adhesive 64 peels away from the ring magnet 63 before peeling away from the back yoke 61, the rotation-stopping recess portion 63c of the ring magnet 63 and the projections of the rotation-stopping projecting portion 64d of the adhesive 64, which are inserted into the holes of the rotation-stopping recess portion 63c and hardened, function as latches to stop the ring magnet 63 from rotating relative to the back yoke 61.

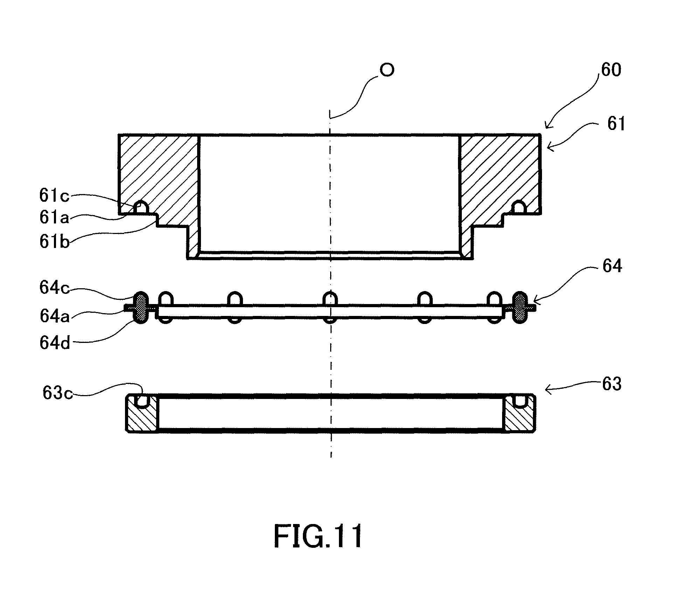

Next, a further embodiment shown in FIG. 11 will be described. In this embodiment, identical reference symbols have been allocated to constitutions which are identical to those of the embodiment described above, and duplicate description thereof has been omitted where appropriate.

The back yoke 61 includes a plurality of holes forming a rotation-stopping recess portion 61c opening onto the attachment end surface 61a. In this embodiment, twelve holes form the rotation-stopping recess portion 61c.

The ring magnet 63 includes a plurality of holes forming a rotation-stopping recess portion 63c opening onto its upper surface. In this embodiment, twelve holes form the rotation-stopping recess portion 63c.

The adhesive 64 includes a plurality of the projections forming a rotation-stopping projecting portion 64c inserted into the holes of the rotation-stopping recess portion 61c and a plurality of holes forming a rotation-stopping projecting portion 64d inserted into the holes of the rotation-stopping recess portion 63c. In this embodiment, twelve projections form the rotation-stopping projecting portion 64c and twelve projections form the rotation-stopping projecting portion 64d.

The adhesive 64 is set such that the adhesive force relative to the back yoke 61 is equal to the adhesive force relative to the ring magnet 63.

In this case, even when the adhesive 64 peels away from both the back yoke 61 and the ring magnet 63, the holes of the rotation-stopping recess portion 61c of the back yoke 61, the projections of the rotation-stopping projecting portion 64c of the adhesive 64, which are inserted therein and hardened, the holes of the rotation-stopping recess portion 63c of the ring magnet 63, and the projections of the rotation-stopping projecting portion 64d of the adhesive 64, which are inserted therein and hardened, all function as latches to stop the ring magnet 63 from rotating relative to the back yoke 61.

Although the invention has been described above with reference to certain embodiments, the invention is not limited to the embodiments described above. Modifications and variations of the embodiments described above will occur to those skilled in the art, within the scope of the claims.

For example, application of the torque sensor according to this invention is not limited to a power steering device for a vehicle. It is widely applicable for the detection of a torque acting between relatively rotating objects connected by a torsion bar.

In the embodiment described above, the rotation-stopping recess portion 61c is constituted by twelve holes, but the rotation-stopping recess portion 61c may be constituted by any number of hole or holes.

Similarly, in the embodiment described above, the rotation-stopping projection portion 64c is constituted by twelve projections, but the rotation-stopping projection portion 64c may be constituted by any number of projection or projections.

The embodiments of this invention in which an exclusive property or privilege is claimed are defined as follows:

## Claims

1. A torque sensor (50) that detects a torque transmitted between a first shaft (10) and a second shaft (20) comprising:
a torsion bar (51) that connects the first shaft (10) and the second shaft (20);
a magnetism generating portion (60) fixed to the first shaft (10); and
a rotating magnetic circuit portion (69) fixed to the second shaft (20),
wherein the torque acting on the torsion bar (51) is detected in accordance with a density of a magnetic flux guided to the rotating magnetic circuit portion (69) from the magnetism generating portion (60),
the magnetism generating portion (60) comprises:
a back yoke (61) that rotates together with the first shaft (10);
a ring magnet (63) joined to the back yoke (61); and
an adhesive (64) that is interposed between the back yoke (61) and the ring magnet (63) to join the two, and
the adhesive (64) comprises a rotation-stopping projecting portion (64c) that engages one of the back yoke (61) and the ring magnet (63).

2. The torque sensor (50) as defined in Claim 1, wherein the one of the back York (61) and the ring magnet (63) has a rotation-stopping recess portion (61c) that accommodates the rotation-stopping projecting portion (64c).

3. The torque sensor (50) as defined in claim 2, wherein the rotation-stopping recess portion (61c) is provided in the form of holes whereas the rotation-stopping projection portion (64c) is provided in the form of projections formed by filling the holes with the adhesive.

4. The torque sensor (50) as defined in Claim 3, wherein the ring magnet (63) comprises a plurality of magnetic poles that generate magnetism in a rotary axis direction of the torsion bar (51),
the magnetic poles are arranged in the ring magnet (63) in a circumferential direction, and
the holes of rotation-stopping recess portion (61c) are disposed in boundary portions between respective adjacent magnetic poles and extending in the rotary axis direction of the torsion bar (51).

5. The torque sensor (50) as defined in any one of Claim 1 to Claim 4, wherein an engagement length by which the rotation-stopping projecting portion (64c) engages with the rotation-stopping recess portion (61c) is set to be longer than a displacement amount by which the ring magnet (63) falls when the adhesion portion peels away.

6. The torque sensor (50) as defined in any one of Claim 1 to Claim 5, wherein the rotation-stopping projecting portion (64c) is formed to face the back yoke (61), and
the adhesive (64) is set such that an adhesive force thereof relative to the back yoke (61) is smaller than an adhesive force thereof relative to the ring magnet (63).

7. The torque sensor (50) as defined in any one of Claim 1 to Claim 5, wherein the rotation-stopping projecting portion (64d) is formed to face the ring magnet (63), and
the adhesive (64) is set such that an adhesive force thereof relative to the back yoke (61) is larger than an adhesive force thereof relative to the ring magnet (63).

8. The torque sensor (50) as defined in any one of Claim 1 to Claim 5, wherein the rotation-stopping projecting portion (64c,64d) is formed to face both the back yoke (61) and the ring magnet (63), and
the adhesive (64) is set such that an adhesive force thereof relative to the ring magnet (63) is equal to an adhesive force thereof relative to the back yoke (61).
